# FASCICULE DE BREVET EUROPEEN

(11) **EP 3 719 684 B1**
(45) Date de publication et mention de la délivrance du brevet: **25.08.2021**
(21) Numéro de dépôt: 20167567.5
(22) Date de dépôt: 01.04.2020
(51) Int. Cl.: G06F 21/44

(54) **PROCÉDÉ DE DÉTECTION DE BOTS DANS UN RÉSEAU D'UTILISATEURS**
VERFAHREN ZUR ERKENNUNG VON BOTS IN EINEM BENUTZERNETZWERK
METHOD FOR DETECTING BOTS IN A USER NETWORK

(30) Priorité: 01.04.2019 FR 1903448
(43) Date de publication de la demande: 07.10.2020
(73) Titulaire: Idemia Identity & Security France, 92400 Courbevoie (FR)
(72) Inventeur: CHABANNE, Hervé, 92400 COURBEVOIE (FR); BOUATOU, Vincent, 92400 COURBEVOIE (FR)
(74) Mandataire: Regimbeau

(56) Documents cités:
- US-A1- 2016 156 653
- US-A1- 2017 185 758
- US-A1- 2018 336 326
- US-B1- 9 942 214

## Description

### DOMAINE DE L'INVENTION

La présente invention concerne un procédé de détection de bots dans un réseau d'utilisateurs.

### ETAT DE LA TECHNIQUE

De façon connue en elle-même, un bot informatique, plus simplement appelé « bot », désigne un agent logiciel automatique ou semi-automatique se faisant passer pour un humain dans un réseaux d'utilisateurs.

De tels bots peuvent être notamment programmés pour déstabiliser le fonctionnement d'un réseau d'utilisateur, par exemple en spammant le réseau.

Pour se prémunir contre de tels problèmes, l'organisateur d'un réseau d'utilisateurs a donc tout intérêt à détecter de tels bots.

Il est par exemple connu de demander à un titulaire d'un compte d'accès à un réseau social de fournir des pièces justificatives attestant qu'il est bien humain. Toutefois, un tel mécanisme est fastidieux.

Il a également envisagé de recourir à la biométrie pour discriminer utilisateurs humains et bots dans un réseau social. Cette idée présente toutefois l'inconvénient d'être relativement complexe de mise en œuvre pour l'organisme qui gère le réseau d'utilisateur, et de requérir du matériel très spécialisé (capteurs biométriques). Or, certains utilisateurs du réseau ne disposent pas toujours de ce matériel, si bien qu'un tel procédé n'est pas généralisable à toute situation.

US 9942214 B1, US2017/185758 A1 et U2016/156653 A1 parmi d'autres exemples d'art antérieur décrivent l'utilisation de méthodes non-CAPTCHA pour évaluer l'activité client utilisateur et l'interaction avec des services assistés par ordinateur pour déterminer si l'activité client utilisateur est cohérente avec celle d'un agent automatisé ou d'un autre processus automatisé. Ces enseignements ont en commun que seule l'interaction avec la ressource cible est utilisée pour déterminer si le client est humain.

### EXPOSE DE L'INVENTION

Un but de l'invention est de détecter des bots dans un réseau d'utilisateurs d'une manière qui soit simple et efficace.

Il est à cet effet proposé, selon un premier aspect de l'invention, un procédé de détection de bots dans un réseau d'utilisateurs, le procédé comprenant des étapes de : réception par un terminal utilisateur d'un identifiant associé à un compte d'utilisateur du réseau ; transmission, par le terminal utilisateur, de l'identifiant à un système de contrôle d'accès configuré pour déterminer si un détenteur du terminal mobile a le droit ou non d'accéder à une zone ou à un service, la zone ou le service étant indépendant du réseau d'utilisateurs ; transmission, par le système de contrôle d'accès à un serveur, d'une donnée représentative du fait que l'identifiant a été reçue par le système de contrôle d'accès ; et utilisation par le serveur de la donnée représentative pour déterminer si l'utilisateur du compte associé à l'identifiant est un bot ou non.

La donnée représentative du fait que l'identifiant a été reçue par le système de contrôle d'accès à une zone sécurisée ou un service sécurisé révèle indirectement que le détenteur du terminal mobile a tenté d'obtenir un accès à la zone sécurisée ou au service sécurisé. De plus, cet identifiant est associé en propre à un compte d'utilisateur du réseau. Ainsi, cette donnée constitue un indice du fait que le titulaire de ce compte est bien un humain ; c'est pourquoi l'utilisation de cette donnée est pertinente pour décider si ce titulaire est un bot ou non. En fait, l'invention met astucieusement à profil une situation ne pouvant être effectuée que par un humain, à savoir demander l'accès à une zone sécurisée ou à un service sécurisé indépendant du réseau d'utilisateurs, pour discriminer humains et bots dans ce réseau d'utilisateurs.

Le procédé selon le premier aspect de l'invention peut également comprendre les caractéristiques optionnelles définies dans les revendications dépendantes, prises seules ou combinées en elles lorsque cela est techniquement possible.

De préférence, les étapes de transmission sont répétées, et dans lequel les données transmises au serveur sont indicatives d'une fréquence à laquelle l'identifiant a été reçue par le système de contrôle d'accès.

De préférence, le compte d'utilisateur définit un identifiant de connexion permettant à un utilisateur de se connecter au réseau, et dans lequel l'identifiant reçu par le terminal utilisateur est un identifiant secondaire différent de l'identifiant de connexion.

De préférence, l'identifiant reçu par le terminal est une donnée ayant une durée de validité temporaire.

De préférence, le terminal utilisateur reçoit plusieurs identifiants qui sont toutes associés au même compte d'utilisateur du réseau, mais qui sont respectivement associés à des systèmes de contrôle d'accès à des zones ou services différents, les étapes de transmission sont mises en œuvre pour chaque identifiant et le système de contrôle d'accès associé à cet identifiant, le serveur utilisant chaque donnée représentative transmise par un système de contrôle d'accès pour déterminer si l'utilisateur du compte utilisateur est un bot ou non.

De préférence, les identifiants sont différents les uns des autres.

De préférence, des niveaux de confiance différents assignés aux différents systèmes de contrôle d'accès sont également utilisés par le serveur pour déterminer si l'utilisateur du compte utilisateur est un bot ou non.

De préférence, des données indicatives des positions géographiques des zones sont également utilisés par le serveur pour déterminer si l'utilisateur du compte utilisateur est un bot ou non.

Par exemple, la zone considérée est un bâtiment, une partie de bâtiment et/ou donne accès à un moyen de transport. Le service considéré peut être un service bancaire, par exemple un retrait d'argent liquide ou une transaction bancaire.

De préférence, le réseau d'utilisateurs est administré par une infrastructure comprenant le serveur mais ne comprenant pas le système de contrôle d'accès.

De préférence, une donnée représentative du fait que l'identifiant a été reçue par un système de contrôle d'accès est transmise au serveur de sorte que le système de contrôle d'accès reste anonyme par rapport au serveur.

Il est également proposé, selon un deuxième aspect de l'invention, un système pour la détection de bots dans un réseau d'utilisateurs, le système comprenant un serveur, un terminal utilisateur et un système de contrôle d'accès configuré pour déterminer si un détenteur du terminal mobile a le droit ou non d'accéder à une zone ou un service, la zone ou le service étant indépendant du réseau d'utilisateurs, dans lequel le terminal utilisateur est configuré pour recevoir au moins un identifiant associé à un compte d'utilisateur du réseau et transmettre l'identifiant au système de contrôle d'accès ; le système de contrôle d'accès est en outre configuré pour transmettre au serveur une donnée représentative du fait que l'identifiant a été reçue par le système de contrôle d'accès ; et le serveur est configuré pour utiliser la donnée représentative pour déterminer si l'utilisateur du compte associé à l'identifiant est un bot ou non.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
Les figures 1 et 2 illustrent de façon schématique un système pour détecter des bots dans un réseau d'utilisateurs.
La figure 3 est un organigramme d'étapes d'un procédé de détection de bots dans un réseau d'utilisateurs, selon un mode de réalisation de l'invention.

Sur l'ensemble des figures, les éléments similaires portent des références identiques.

### DESCRIPTION DETAILLEE DE L'INVENTION

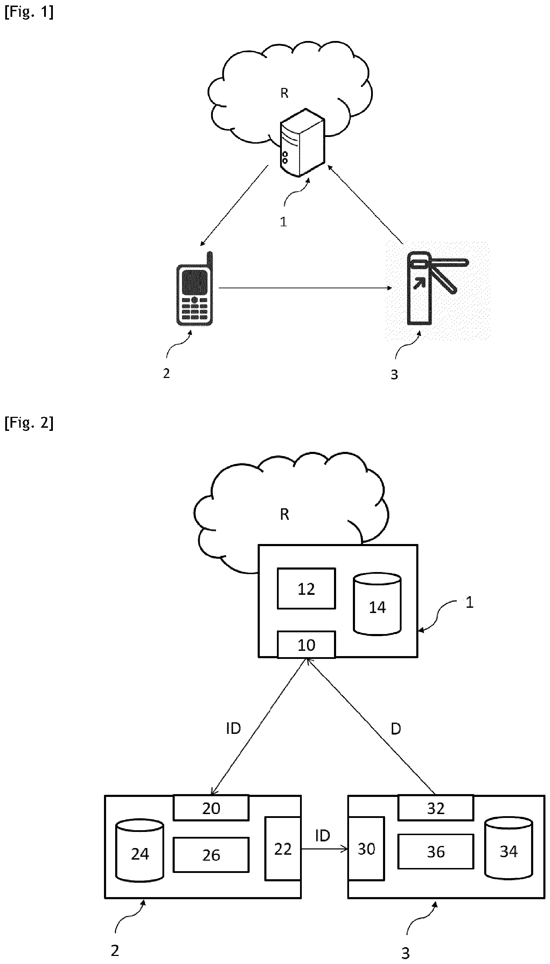

En référence à la **figure 1****,** un système pour détecter des bots dans un réseau d'utilisateurs R comprend un serveur 1, un terminal utilisateur 2, et au moins un système de contrôle d'accès 3.

Le serveur 1 fait partie d'une infrastructure donnant à des utilisateurs accès au réseau R. Le réseau d'utilisateurs R est par exemple une plateforme de réseautage social connectée à Internet, plateforme que l'on appelle communément « réseau social ».

Le terminal utilisateur 2 a vocation à être détenu par un utilisateur humain du réseau R. Il peut par exemple être un smartphone, un ordinateur portable, ou bien une carte à puce.

Par ailleurs, le système de contrôle d'accès 3 a pour fonction de contrôler l'accès d'un utilisateur à une zone ou à un service. La zone ou le service est indépendant(e) du réseau d'utilisateurs R.

En particulier, le système de contrôle d'accès 3 ne fait pas partie de l'infrastructure qui gère le réseau d'utilisateurs R.

En référence à la **figure 2****,** le serveur 1 comprend typiquement une interface de communication 10, une unité de traitement de données 12, et une mémoire 14.

L'interface de communication 10 est reliée à Internet.

L'unité de traitement 12 comprenant par exemple au moins un processeur configuré pour exécuter un programme d'ordinateur.

L'unité de traitement 12 a pour fonction de gérer des comptes d'utilisateurs de ce réseau d'utilisateurs R. Le serveur 1 peut par exemple être configuré pour enrôler de nouveaux utilisateurs, c'est-à-dire leur créer des comptes leur permettant d'accéder au réseau d'utilisateurs R. Un compte définit notamment pour un utilisateur nouvellement enrôlé un identifiant de connexion et un mot de passe.

L'unité de traitement 12 peut également être configurée pour contrôler l'accès d'utilisateurs au réseau d'utilisateurs R ou certains services de ce réseau. Lors d'un tel contrôle, le serveur 1 vérifie si un identifiant de connexion et un mot de passe saisis par un utilisateur souhaitant accéder au réseau d'utilisateurs R correspondent bien à un compte préalablement créé.

L'unité de traitement 12 a par ailleurs pour fonction de détecter des bots dans le réseau d'utilisateurs R. On verra par la suite que l'unité de traitement 12 se fonde sur des données particulières pour décider si le titulaire d'un compte s'avère être un bot ou pas.

Par ailleurs, le terminal utilisateur 2 comprend par ailleurs une première interface de communication 20 pour communiquer avec le serveur 1, une deuxième interface de communication 22 pour communiquer avec le ou chaque système de contrôle d'accès 3, une mémoire 24 et une unité de traitement de données 26.

La première interface de communication 20 peut être configurée pour accéder à Internet. Elle est de préférence de type radio sans fil, par exemple cellulaire (3G/4G/5G) ou Wi-Fi.

La deuxième interface de communication 22 est également de préférence de type radio sans fil. La première interface de communication 20 et la deuxième interface de communication 22 peuvent en réalité être une seule et même interface de communication. En variante, la deuxième interface de communication 22 est d'un type différent de la première interface de communication 20. Par exemple, la deuxième interface est de type communication en champ proche (NFC) ou Bluetooth.

La mémoire 24 est non volatile, par exemple de type SSD, HDD, Flash, EEPROM, etc. Elle est adaptée pour mémoriser des données reçues par la première interface de communication 20.

L'unité de traitement de données 26 est configurée pour commander ou participer à une communication de données avec le système de contrôle d'accès 3 via la deuxième interface de communication 22.

L'unité de traitement de données 26 peut également exécuter une application jouant le rôle d'interface d'accès au réseau d'utilisateurs R. Un tel programme ou application peut par exemple être téléchargée sur une plateforme de téléchargement en ligne.

Le système de contrôle 3 comprend une première interface de communication 30 pour communiquer avec le terminal utilisateur 2, une deuxième interface de communication 32 pour communiquer avec le serveur 1, une mémoire 34 et une unité de traitement de données 36.

La première interface de communication 30 est du même type que la deuxième interface de communication 22 du terminal utilisateur 2.

La deuxième interface de communication 32 est de type filaire (Ethernet) ou radio sans fil (Wi-Fi, Bluetooth, etc.). Elle peut être du même type que la première interface de communication 32 du terminal utilisateur 2.

La mémoire 34 est non volatile, par exemple de type SSD, HDD, Flash, EEPROM, etc. Elle est adaptée pour mémoriser des données reçues par la première interface de communication 30.

L'unité de traitement de données 36 comprend au moins un processeur. Elle est notamment configurée pour déterminer si un usager a le droit ou non d'accéder à une zone contrôlée par le système de contrôle d'accès 3, ou d'accéder à un service que le système est susceptible de rendre à un tel usager.

Dans le cas d'un contrôle d'accès à une zone, le système de contrôle d'accès 3 peut en outre comprendre un portique (voir figure 1) susceptible d'être ouvert pour laisser une personne physique accéder à la zone concernée, ou d'être fermé pour empêcher la personne physique d'accéder cette zone. Dans ce cas, la première interface de communication 30 peut être incluse dans un tel portique, de sorte qu'une communication puisse être établie entre le terminal utilisateur 2 et le système de contrôle d'accès 3, lorsque le détenteur du terminal utilisateur 2 passe à proximité du portique.

Par exemple, la zone concernée est une zone permettant d'accéder à un moyen de transport tel que train ou métro (auquel cas le portique se trouve en amont d'un quai) ou bien avion (auquel cas le portique se situe dans un aéroport). Dans un autre exemple, la zone est un bâtiment ou une partie de bâtiment. Le portillon peut alors se trouver dans le hall d'un immeuble.

Dans le cas d'un contrôle d'accès à un service, ce service peut être un service bancaire, par exemple un retrait d'argent liquide, auquel cas, le système de contrôle d'accès comprend un distributeur d'argent liquide, se trouvant par exemple en extérieur ou bien dans un bâtiment.

Alternativement, le service peut être une transaction bancaire, auquel cas le système de contrôle comprend un terminal de paiement (Point Of Sale en anglais, généralement abrégé en POS) apte à communiquer avec un serveur bancaire. Un tel terminal de paiement est typiquement utilisé dans un commerce, par exemple une boutique, un restaurant, etc.

Quel que soit le type d'accès considéré (à une zone ou à un service), cet accès n'est pas un accès au réseau d'utilisateurs R lui-même.

Bien qu'un seul système de contrôle d'accès soit représenté sur les figures 1 et 2, il est entendu que le système de détection de bots dans le réseau d'utilisateurs R peut comprendre plusieurs systèmes de contrôle d'accès 3 contrôlant des accès à des zones ou services respectifs différents, chacun de ces systèmes 3 étant conforme à la description qui précède.

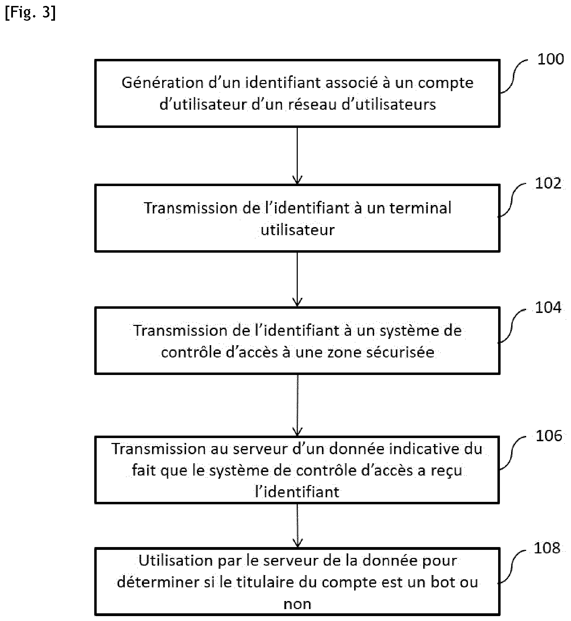

En référence à la **figure 3****,** un procédé pour détecter des bots dans le réseau d'utilisateurs R comprend les étapes suivantes.

Dans une étape préliminaire, un utilisateur s'enrôle auprès du serveur 1, de sorte à adhérer au réseau d'utilisateurs R. Au cours de cet enrôlement, connu en lui-même, l'unité de traitement 12 génère pour cet utilisateur un compte comprenant un identifiant de connexion et un mot de passe, qui lui permettront ensuite d'accéder aux services du réseau d'utilisateurs R, par exemple depuis son terminal utilisateur 2, ou depuis un autre terminal.

A ce stade, il existe une incertitude sur la nature de l'utilisateur enrôlé (personne physique ou bot).

L'unité de traitement 12 du serveur 1 génère pour cet utilisateur au moins un autre identifiant ID que l'on nomme dans la suite « identifiant secondaire » pour le différencier de l'identifiant de connexion (étape 100).

A la différence de l'identifiant de connexion, l'identifiant secondaire ID n'a pas destiné à être utilisé par l'utilisateur pour se connecter au réseau R. On verra dans la suite que cet identifiant secondaire ID sert indirectement à déterminer si l'utilisateur est un bot ou non.

On suppose par ailleurs que le serveur 1 a détecté que le terminal utilisateur 2 appartient à l'utilisateur qui s'est enrôlé. Pour cela, le serveur 1 peut tout simplement identifier depuis quel dispositif une demande d'adhésion au réseau R (enrôlement) a été émise. Dans ce cas, l'existence du terminal utilisateur 2 peut être connue du serveur 1 dès l'enrôlement. Alternativement, une telle détection peut être effectué lorsqu'une application de connexion au réseau R installée sur le terminal utilisateur 2 est utilisée par un détenteur de ce terminal pour tenter de se connecter au réseau R, en entrant son identifiant de connexion et son mot de passe.

Par la suite, le terminal utilisateur 2 reçoit l'identifiant secondaire ID généré (étape 102).

Par exemple, l'identifiant secondaire ID est transmis par le serveur 1 au terminal utilisateur 2 via un canal de communication établi entre les interfaces de communications 10 et 20. Cette transmission est par exemple demandée par l'application installée dans le terminal utilisateur 2, ou initiée spontanément par le serveur 1. Alternativement, le terminal utilisateur obtient l'identifiant secondaire ID par un autre canal, faisant intervenir un équipement tiers par exemple.

L'identifiant secondaire ID est mémorisé dans la mémoire 24 du terminal utilisateur 2.

Ultérieurement, le détenteur du terminal utilisateur 2 se rapproche de la zone sécurisée contrôlée par le système de contrôle d'accès 3. Par exemple, si la zone sécurisée est une zone d'accès à un moyen de transport, ce détenteur se rapproche pour cela d'un portique lui barrant l'accès à ce moyen de transport.

Pour ouvrir le portique, le détenteur rapproche son terminal utilisateur 2 du portique, de sorte que s'établisse une communication entre l'interface de communication 22 du terminal utilisateur 2 et l'interface de communication 30 du système de contrôle d'accès 3.

L'unité de traitement 36 met en œuvre une étape de contrôle d'accès durant laquelle elle détermine si le détenteur du terminal utilisateur 2 a le droit ou non d'accéder à la zone sécurisée, sur la base d'informations échangées avec le terminal utilisateur 2.

Par exemple, dans le cas de l'accès à un moyen de transport, le terminal utilisateur 2 peut être censé constituer un titre de transport, au sens où il peut mémoriser des données représentatives d'un titre de transport dématérialisé. La communication établie entre le terminal utilisateur 2 et le système de contrôle d'accès 3 a pour but de déterminer si ce titre de transport est valable, c'est-à-dire si le possesseur du terminal mobile a ou non le droit d'accéder au moyen de transport. Si tel est le cas, le portique s'ouvre pour le laisser accéder à ce moyen de transport. Sinon le portique reste fermé.

Concomitamment à ce contrôle d'accès, le terminal utilisateur 2 transmet au système de contrôle d'accès 3 l'identifiant secondaire ID qu'il avait préalablement mémorisé (étape 104).

L'identifiant secondaire ID est ensuite mémorisé dans la mémoire 34 du système de contrôle d'accès 3.

La date à laquelle l'identifiant secondaire ID a été transmis par le terminal utilisateur 2 au système est également mémorisée dans la mémoire 34, en association avec l'identifiant secondaire ID.

L'étape de transmission 104 est mise en œuvre à chaque fois que le détenteur sollicite le système d'accès à la zone sécurisée, en vue d'y accéder. Par conséquent, l'identifiant secondaire ID peut se retrouver associé dans la mémoire à des dates différentes.

L'unité de traitement 36 peut également mémoriser dans la mémoire 34 une donnée de résultat de contrôle d'accès (à savoir une donnée indiquant si le système de contrôle 3 a donné au détenteur du terminal mobile 2 un accès à la zone sécurisée).

L'unité de traitement 36 du système de contrôle d'accès 3 génère au moins une donnée D représentative du fait que l'identifiant a été reçue par le système de contrôle d'accès 3.

De préférence, les données D comprennent une fréquence à laquelle l'identifiant a été reçue par le système de contrôle d'accès 3, suite à plusieurs sollicitations du système de contrôle d'accès 3 à la zone sécurisée par le détenteur du terminateur utilisateur 2. Cette fréquence est représentative d'une fréquence à laquelle le détenteur du terminal utilisateur 2 a souhaité obtenir un accès à la zone sécurisée.

Cette fréquence peut être calculée par exemple sous la forme d'un délai séparant deux mises en œuvre successive de l'étape de transmission de l'identifiant secondaire ID par le terminal utilisateur 2 au système de contrôle d'accès 3, ou bien sous la forme d'un nombre de telles transmissions dans une période de temps de durée prédéterminée.

Le système de contrôle d'accès 3 transmet au serveur 1 les données D représentatives du fait que l'identifiant a été reçue par le système de contrôle d'accès 3 (étape 106).

De manière préférentielle, cette transmission est faite de telle façon que le système de contrôle d'accès 3 reste anonyme par rapport au serveur 1. Par « anonyme », on entend que le serveur 1 ne reçoit pas d'information lui permettant de déterminer l'accès (zone ou service) que contrôle le système de contrôle 3. Ceci est avantageux car est plus respectueux de la vie privée du possesseur du terminal 2 : il n'est en effet pas désirable que l'infrastructure qui administre le réseau d'utilisateurs ait à connaître des différents accès que demande ce possesseur.

Le système de contrôle 3 peut également transmettre au serveur, en association avec la donnée D, l'identifiant ID.

En revanche, le système de contrôle d'accès 3 ne transmet pas au serveur 1 les dates qu'il a mémorisées, de sorte à préserver la vie privée du détenteur du terminal utilisateur 2.

Les étapes 100, 100, 104, 106 qui précèdent peut-être répétées pour plusieurs systèmes de contrôle d'accès 3 à des zones sécurisées différentes. Il est préférable dans ce cas que le serveur 1 génère des identifiants secondaires différents respectivement associés à ces systèmes de contrôle d'accès différents. Autant d'identifiants secondaires sont donc générés au cours de l'étape 100 qu'il existe de systèmes de contrôle d'accès à des zones sécurisées. Alternativement, un même identifiant secondaire ID peut être partagé entre plusieurs systèmes de contrôle d'accès 3 différents ; autrement dit, le nombre d'identifiants secondaires générés est dans ce cas inférieur au nombre de systèmes de contrôle d'accès 3.

Le serveur 1 utilise les données qu'il reçoit via son interface de communication 10 d'au moins un système de contrôle d'accès 3 pour déterminer si le titulaire du compte utilisateur auquel l'identifiant secondaire ID est associé est un bot ou non (étape 108).

Par exemple, dans un mode de réalisation particulièrement tolérant, le serveur 1 considère que ce titulaire n'est pas un bot dès qu'il reçoit du système de contrôle d'accès 3 une donnée représentative du fait que l'identifiant secondaire ID a été reçu par ce système de contrôle d'accès 3.

Dans des modes de réalisation plus exigeants, le serveur 1 peut ne prendre la décision que le titulaire n'est pas un bot que lorsque davantage de conditions sont remplies. Le serveur 1 peut poser comme condition qu'une fréquence D remontée doivent être supérieure à un seuil prédéterminé.

Le serveur 1 peut en outre poser comme condition que des données sont remontées par plusieurs systèmes de contrôles d'accès 3 à des zones sécurisées différentes plutôt qu'un seul.

Ces conditions peuvent être utilisées alternativement ou bien être cumulées.

Lorsque plusieurs systèmes de contrôle d'accès 3 sont utilisés, ces systèmes peuvent se voir affecter différents niveaux de confiance par le serveur 1. Le serveur 1 mémorise par exemple dans sa mémoire 14 les niveaux de confiance respectifs des différents systèmes de contrôle d'accès 3. Lorsqu'une donnée D représentative du fait que l'identifiant ID a été reçu par un système de contrôle d'accès 3 est transmise au serveur 1, cette donnée D est pondérée par le niveau de confiance affecté au système de contrôle d'accès 3 avant utilisation par le serveur 1 pour sa prise de décision quant à la nature de bot ou non du titulaire du compte associé à l'identifiant secondaire ID correspondant.

Le serveur 1 peut également utiliser, pour sa prise de décision, des données indicatives des positions géographiques des différents systèmes de contrôle d'accès 3 sollicités et remontant au serveur 1 des données D. Ces positions géographiques peuvent être prédéterminées et mémorisées dans la mémoire du serveur 1. Alternativement, les systèmes de contrôle d'accès peuvent transmettre eux-mêmes au serveur 1 les données de position les concernant.

Dans tous les cas, le serveur 1 peut décider que le titulaire du compte est un bot lorsque des données qui semblent contradictoires sont remontées par plusieurs systèmes de contrôle d'accès. Par exemple, il peut s'agir de deux fréquences d'accès élevées qui sont remontées par deux systèmes de contrôle d'accès pour lesquels l'étape 104 a eu lieu en deux endroits éloignés l'un de l'autre. Par exemple, le serveur 1 apprenant qu'un utilisateur demande un accès quotidien au métro de Paris et demande un accès quotidien au métro de Moscou pourra conclure que cet utilisateur est un bot.

Voici un exemple de liste d'informations qui peuvent être remontées, mémorisées dans la mémoire 14, et utilisées pour l'étape 108 de prise de décision, en relation avec un compte d'utilisateur donné.
- Trois identifiants secondaires ID1, ID2, ID3
- Différents partenaires gérant des systèmes de contrôle d'accès différentes
   ∘ partenaire 1 : européen, de confiance haute
   ∘ partenaire 2 : européen, de confiance moyenne
   ∘ partenaire 3 : américain, de confiance haute
- pour une période donnée :
   ∘ ID1 : passages fréquents chez partenaire 1
   ∘ ID1 : passages quotidiens chez partenaire 2
   ∘ ID2 : un passage chez partenaire 3
   ∘ ID3 n'a jamais été utilisé

De préférence, un identifiant secondaire ID généré par le serveur 1 est une donnée ayant une durée de validité temporaire. Au terme d'un délai prédéterminé, le serveur 1 génère un nouvel identifiant secondaire ID associé à un système de contrôle d'accès 3 à une zone ou un service, et le transmet au terminal utilisateur 2.

Quelle que soit la politique adoptée par le serveur 1 pour décider si le titulaire d'un compte est un bot ou non, le serveur 1 peut prendre des décisions n'ayant des effets que sur une période de temps limitée. Par exemple, le serveur 1 parvenant à la conclusion que le titulaire d'un compte n'est pas un bot, du fait qu'il a sollicité tel ou tel système de contrôle d'accès 3 à une zone ou un service, peut suspendre ses vérifications concernant ce titulaire pendant une période prédéterminée. Une fois cette période écoulée, le serveur 1 peut examiner à nouveau si le titulaire est un bot ou non. A l'inverse, le serveur 1 parvenant à la conclusion que le titulaire d'un compte est un bot peut bannir ce titulaire du réseau d'utilisateurs R (c'est-à-dire l'empêcher d'accéder à des services du réseau d'utilisateurs R) pendant une période prédéterminée. Une fois cette période écoulée, le serveur 1 peut réexaminer à nouveau si le titulaire est un bot ou non.

Bien entendu, l'invention ne se limite pas aux modes de réalisations décrits précédemment. Notamment :
- Il n'est pas nécessaire que le serveur 1 prenant une décision quant à la nature d'un utilisateur (bot ou non) soit également celui qui enrôle des utilisateurs. Il suffit que le serveur 3 puisse avoir accès à une mémoire mémorisant les comptes d'utilisateurs du réseau.
- L'invention n'est pas limitée au cas d'un réseau social ; elle est applicable à tout réseau auquel des utilisateurs peuvent accéder moyennant un compte d'utilisateur, derrière lequel un bot est susceptible de se cacher : site de jeu en ligne, site de rencontres, etc.
- Il n'est pas nécessaire qu'un serveur 3 et le serveur 1 communiquent entre eux directement par un canal de communication direct. Une donnée peut être remontée par un système de contrôle d'accès 3 au serveur 1 par l'intermédiaire d'un système tiers.

## Revendications

1. Procédé de détection de bots dans un réseau d'utilisateurs (R), le procédé comprenant des étapes de :
- réception (102) par un terminal utilisateur (2) d'un identifiant (ID) associé à un compte d'utilisateur du réseau,
- transmission (104), par le terminal utilisateur (2), de l'identifiant (ID) à un système de contrôle d'accès (3) configuré pour déterminer si un détenteur du terminal utilisateur (2) a le droit ou non d'accéder à une zone ou à un service, la zone ou le service étant indépendant du réseau d'utilisateurs (R),
- transmission (106), par le système de contrôle d'accès (3) à un serveur (1), d'une donnée représentative du fait que l'identifiant (ID) a été reçue par le système de contrôle d'accès (3),
- utilisation (108) par le serveur (1) de la donnée représentative pour déterminer si l'utilisateur du compte associé à l'identifiant (ID) est un bot ou non.

2. Procédé selon la revendication 1, dans lequel les étapes de transmission (104, 106) sont répétées, et dans lequel les données transmises au serveur (1) sont indicatives d'une fréquence à laquelle l'identifiant (ID) a été reçue par le système de contrôle d'accès (3).

3. Procédé selon l'une des revendications précédentes, dans lequel le compte d'utilisateur définit un identifiant de connexion permettant à un utilisateur de se connecter au réseau, et dans lequel l'identifiant (ID) reçu par le terminal utilisateur (2) est un identifiant secondaire différent de l'identifiant de connexion.

4. Procédé selon l'une des revendications précédentes, dans lequel l'identifiant (ID) reçu par le terminal est une donnée ayant une durée de validité temporaire.

5. Procédé selon l'une des revendications précédentes, dans lequel le terminal utilisateur (2) reçoit plusieurs identifiants (ID) qui sont toutes associés au même compte d'utilisateur du réseau, mais qui sont respectivement associés à des systèmes de contrôle d'accès à des zones ou services différents, les étapes de transmission sont mises en œuvre pour chaque identifiant (ID) et le système de contrôle d'accès (3) associé à cet identifiant (ID), le serveur (1) utilisant chaque donnée représentative transmise par un système de contrôle d'accès (3) pour déterminer si l'utilisateur du compte utilisateur est un bot ou non.

6. Procédé selon la revendication 5, dans lequel les identifiants (ID) sont différents les uns des autres.

7. Procédé selon l'une des revendications 5 et 6, dans lequel des niveaux de confiance différents assignés aux différents systèmes de contrôle d'accès sont également utilisés par le serveur (1) pour déterminer si l'utilisateur du compte utilisateur est un bot ou non.

8. Procédé selon l'une des revendications 5 à 7, dans lequel des données indicatives des positions géographiques des zones sont également utilisés par le serveur (1) pour déterminer si l'utilisateur du compte utilisateur est un bot ou non.

9. Procédé selon l'une des revendications précédentes, dans lequel :
- la zone est un bâtiment, une partie de bâtiment et/ou donne accès à un moyen de transport, ou
- le service est un service bancaire, par exemple un retrait d'argent liquide ou une transaction bancaire.

10. Procédé selon l'une des revendications précédentes, dans lequel le réseau d'utilisateurs est administré par une infrastructure comprenant le serveur (1) mais ne comprenant pas le système de contrôle d'accès.

11. Procédé selon l'une des revendications précédentes, dans lequel une donnée représentative du fait que l'identifiant (ID) a été reçue par un système de contrôle d'accès (3) est transmise au serveur (1) de sorte que le système de contrôle d'accès (3) reste anonyme par rapport au serveur (1).

12. Système pour la détection de bots dans un réseau d'utilisateurs (R), le système comprenant un serveur (1), un terminal utilisateur (2) et un système de contrôle d'accès (3) configuré pour déterminer si un détenteur du terminal utilisateur (2) a le droit ou non d'accéder à une zone ou un service, la zone ou le service étant indépendant du réseau d'utilisateurs (R), dans lequel
- le terminal utilisateur (2) est configuré pour : recevoir au moins un identifiant (ID) associé à un compte d'utilisateur du réseau et transmettre l'identifiant (ID) au système de contrôle d'accès (3),
- le système de contrôle d'accès (3) est en outre configuré pour transmettre au serveur (1) une donnée représentative du fait que l'identifiant (ID) a été reçue par le système de contrôle d'accès (3),
- le serveur (1) est configuré pour utiliser la donnée représentative pour déterminer si l'utilisateur du compte associé à l'identifiant (ID) est un bot ou non.

## Patentansprüche

1. Verfahren zur Erkennung von Bots in einem Benutzernetzwerk (R), wobei das Verfahren die folgenden Schritte umfasst:
- durch ein Benutzerendgerät (2), Empfang (102) einer Kennung (ID), die einem Benutzerkonto des Netzwerks zugehörig ist,
- durch das Benutzerendgerät (2), Senden (104) der Kennung (ID) an ein Zugangskontrollsystem (3), das dazu ausgestaltet ist, zu bestimmen, ob ein Inhaber des Benutzerendgeräts (2) über die Berechtigung zum Zugang zu einer Zone oder einem Dienst verfügt oder nicht, wobei die Zone oder der Dienst unabhängig von dem Benutzernetzwerk (R) ist,
- durch das Zugangskontrollsystem (3), Senden (106) eines Datenelements, das für die Tatsache repräsentativ ist, dass die Kennung (ID) durch das Zugangskontrollsystem (3) empfangen wurde, an einen Server (1),
- durch den Server (1), Nutzung (108) des repräsentativen Datenelements, um zu bestimmen, ob der Benutzer des mit der Kennung (ID) verknüpften Kontos ein Bot ist oder nicht.

2. Verfahren nach Anspruch 1, wobei die Sendeschritte (104, 106) wiederholt werden und wobei die an den Server (1) übertragenen Daten eine Häufigkeit angeben, mit der die Kennung (ID) von dem Zugangskontrollsystem (3) empfangen wurde.

3. Verfahren nach einem der vorhergehenden Ansprüche, wobei das Benutzerkonto eine Verbindungskennung definiert, die es einem Benutzer ermöglicht, sich mit dem Netz zu verbinden, und wobei die durch das Benutzerendgerät (2) empfangene Kennung (ID) eine Nebenkennung ist, die sich von der Verbindungskennung unterscheidet.

4. Verfahren nach einem der vorhergehenden Ansprüche, wobei die durch das Endgerät empfangene Kennung (ID) ein Datenelement ist, das eine vorübergehende Gültigkeitsdauer aufweist.

5. Verfahren nach einem der vorhergehenden Ansprüche, wobei das Benutzerendgerät (2) mehrere Kennungen (ID) empfängt, die alle dem gleichen Benutzerkonto des Netzes zugehörig sind, aber die jeweils verschiedenen Systemen zur Kontrolle des Zugangs zu verschiedenen Zonen oder Diensten zugehörig sind, wobei die Sendeschritte für jede Kennung (ID) und das dieser Kennung (ID) zugehörige Zugangskontrollsystem (3) durchgeführt werden, wobei der Server (1) jedes von einem Zugangskontrollsystem (3) gesendete repräsentative Datenelement verwendet, um zu bestimmen, ob der Benutzer des Benutzerkontos ein Bot ist oder nicht.

6. Verfahren nach Anspruch 5, wobei die Kennungen (ID) sich voneinander unterscheiden.

7. Verfahren nach einem der Ansprüche 5 und 6, wobei die verschiedenen, den Zugangskontrollsystemen zugewiesenen Konfidenzniveaus auch von dem Server (1) verwendet werden, um zu bestimmen, ob der Benutzer des Benutzerkontos ein Bot ist oder nicht.

8. Verfahren nach einem der Ansprüche 5 bis 7, wobei die Daten, die geografische Positionen der Zonen angeben, auch von dem Server (1) verwendet werden, um zu bestimmen, ob der Benutzer des Benutzerkontos ein Bot ist oder nicht.

9. Verfahren nach einem der vorhergehenden Ansprüche, wobei:
- die Zone ein Gebäude oder ein Gebäudeteil ist und/oder Zugang zu einem Transportmittel verschafft, oder
- der Dienst ein Bankendienst, zum Beispiel ein Bezug von Bargeld oder eine Banktransaktion, ist.

10. Verfahren nach einem der vorhergehenden Ansprüche, wobei das Benutzernetzwerk von einer Infrastruktur verwaltet wird, die den Server (1) umfasst, aber nicht das Zugangskontrollsystem umfasst.

11. Verfahren nach einem der vorhergehenden Ansprüche, wobei ein Datenelement, das für die Tatsache repräsentativ ist, dass die Kennung (ID) durch ein Zugangskontrollsystem (3) empfangen wurde, derart an den Server (1) gesendet wird, dass das Zugangskontrollsystem (3) in Bezug auf den Server (1) anonym bleibt.

12. System zur Erkennung von Bots in einem Benutzernetzwerk (R), wobei das System einen Server (1), ein Benutzerendgerät (2) und ein Zugangskontrollsystem (3) umfasst, das dazu ausgestaltet ist, zu bestimmen, ob ein Inhaber des Benutzerendgeräts (2) über die Berechtigung für den Zugang zu einer Zone oder einem Dienst verfügt oder nicht, wobei die Zone oder der Dienst unabhängig von dem Benutzernetzwerk (R) ist, wobei
- das Benutzerendgerät (2) ausgestaltet ist zum: Empfangen mindestens einer Kennung (ID), die einem Benutzerkonto des Netzes zugehörig ist, und Senden der Kennung (ID) an das Zugangskontrollsystem (3),
- das Zugangskontrollsystem (3) ferner dazu ausgestaltet ist, an den Server (1) ein Datenelement zu senden, das für die Tatsache repräsentativ ist, dass die Kennung (ID) durch das Zugangskontrollsystem (3) empfangen wurde,
- der Server (1) dazu ausgestaltet ist, das repräsentative Datenelement zu nutzen, um zu bestimmen, ob der Benutzer des der Kennung (ID) zugehörigen Kontos ein Bot ist oder nicht.

## Claims

1. A method for detecting bots in a user network (R), the method comprising steps of:
- receiving (102) at a user terminal (2) an identifier (ID) associated with a network user account,
- transmitting (104), by the user terminal (2), the identifier (ID) to an access control system (3) configured to determine whether an owner of the user terminal (2) has the right or not to access an area or a service, the area or the service being independent of the user network (R),
- transmitting (106), by the system for controlling access (3) to a server (1), a data representative of the fact that the identifier (ID) has been received from the access control system (3),
- using (108), by the server (1), the representative data to determine whether the user of the account associated with the identifier (ID) is a bot or not.

2. The method according to claim 1, wherein the transmission steps (104, 106) are repeated, and wherein the data transmitted to the server (1) are indicative of a frequency at which the identifier (ID) has been received from the access control system (3).

3. The method according to any of the preceding claims, wherein the user account defines a connection identifier allowing a user to connect to the network,
and wherein the identifier (ID) received from the user terminal (2) is a secondary identifier different from the connection identifier.

4. The method according to any of the preceding claims, wherein the identifier (ID) received from the terminal is a data with a temporary validity period.

5. The method according to any of the preceding claims, wherein the user terminal (2) receives several identifiers (ID) which are all associated with the same user account of the network, but which are respectively associated with systems for controlling access to different areas or services, the transmission steps are implemented for each identifier (ID) and the access control system (3) are associated with this identifier (ID), the server (1) using each representative data transmitted by an access control system (3) to determine whether the user of the user account is a bot or not.

6. The method according to claim 5, wherein the identifiers (ID) are different from each other.

7. The method according to any of claims 5 and 6, wherein different levels of trust assigned to the different access control systems are also used by the server (1) to determine whether the user of the user account is a bot or not.

8. The method according to any of claims 5 to 7, wherein data indicative of geographical positions of the areas are also used by the server (1) to determine whether the user of the user account is a bot or not.

9. The method according to any of the preceding claims, wherein:
- the area is a building, part of a building and/or gives access to a means of transport, or
- the service is a banking service, for example a cash withdrawal or a banking transaction.

10. The method according to any of the preceding claims, wherein the user network is administered by an infrastructure comprising the server (1) but not comprising the access control system.

11. The method according to any of the preceding claims, wherein a data representative of the fact that the identifier (ID) has been received from an access control system (3) is transmitted to the server (1) so that the access control system (3) remains anonymous relative to the server (1).

12. A system for the detection of bots in a user network (R), the system comprising a server (1), a user terminal (2) and an access control system (3) configured to determine whether an owner of the user terminal (2) has the right or not to access an area or a service, the area or the service being independent of the user network (R), wherein
- the user terminal (2) is configured to: receive at least one identifier (ID) associated with a network user account and transmit the identifier (ID) to the access control system (3),
- the access control system (3) is further configured to transmit to the server (1) a data representative of the fact that the identifier (ID) has been received from the access control system (3),
- the server (1) is configured to use the representative data to determine whether the user of the account associated with the identifier (ID) is a bot or not.
